# FASCICULE DE BREVET EUROPEEN

(11) **EP 3 312 435 B1**
(45) Date de publication et mention de la délivrance du brevet: **23.01.2019**
(21) Numéro de dépôt: 17194702.1
(22) Date de dépôt: 04.10.2017
(51) Int. Cl.: F15B 15/19, B64D 1/06

(54) **VERIN POUR L'ACTIONNEMENT D'UN PANTOGRAPHE APPARTENANT A UN DISPOSITIF D'ACCROCHAGE DE CHARGE POUR AERONEF**
ZYLINDER ZUR BETÄTIGUNG EINES STROMABNEHMERS, DER ZU EINER LASTAUFHÄNGEVORRICHTUNG FÜR LUFTFAHRZEUGE GEHÖRT
CYLINDER FOR ACTUATING A PANTOGRAPH BELONGING TO A LOAD-HANGING DEVICE FOR AIRCRAFT

(30) Priorité: 18.10.2016 FR 1660081
(43) Date de publication de la demande: 25.04.2018
(73) Titulaire: Alkan, 94460 Valenton (FR)
(72) Inventeur: GUARALDO, Denis, 78140 VELIZY-VILLACOUBLAY (FR)
(74) Mandataire: Zimmermann, Alain

(56) Documents cités:
- US-A- 3 037 805
- US-A- 5 029 776
- US-A1- 2013 145 928
- US-B1- 7 506 569

## Description

La présente invention concerne un vérin pour l'actionnement d'un pantographe de largage appartenant à un dispositif d'accrochage de charge pour aéronef afin de larguer ladite charge.

Il existe actuellement différents types de dispositif de largage de charge accroché sous un aéronef tel qu'un avion de chasse ou un hélicoptère de combat. En général ceux-ci comprennent principalement des moyens d'attache de la charge sous l'aéronef, par exemple sous la forme de rotules (appelées également tulipes) de type connu, un système extensible de support de charge en forme de pantographe, également de type connu, un berceau de support de la charge et un vérin de déclenchement du pantographe. Or, il est nécessaire d'utiliser un vérin pouvant développer une force avec une vitesse importante de sortie de tige. C'est pourquoi des sources pyrotechniques ou pneumatiques sont utilisées.

Or, les vérins à déclenchement pyrotechnique présentent un inconvénient lié à la perte de disponibilité due au nettoyage après chaque utilisation, ce qui induit des temps d'attente pour l'installation d'une nouvelle charge. En cas d'endommagement ces vérins sont par ailleurs difficiles à changer.

Le document US 3037805 divulgue un mode de réalisation d'un magasin à munition et un dispositif de largage utilisable dans un aéronef.

Un but de la présente invention est donc de résoudre les problèmes cités précédemment et de proposer une solution simple à mettre en oeuvre, fiable et réduisant notablement les temps masqués de nettoyage.

Ainsi, la présente invention a pour objet un vérin pour l'actionnement d'un pantographe de largage appartenant à un dispositif d'accrochage de charge pour aéronef afin de larguer ladite charge, ledit vérin comportant :
- un corps creux muni d'un orifice de mise à l'air libre,
- une tige de vérin coulissant longitudinalement à l'intérieur du corps creux pour pousser le pantographe,
- une chambre arrière d'explosion communiquant avec la tige de vérin,
- au moins un dispositif propulsant un volume de gaz sous pression dans la chambre arrière d'explosion pour provoquer le déplacement à vitesse élevée de ladite tige de vérin dans le corps creux, ledit dispositif étant par exemple un impulseur pyrotechnique ou un réservoir muni d'une valve, et un élément d'attache amovible dont une extrémité avant est fixé à la chambre arrière d'explosion et dont une extrémité arrière est reliée de manière détachable à un support rigide de reprise des efforts de sorte que le vérin est démontable et interchangeable, caractérisé en ce que l'élément d'attache amovible comprend, en partie arrière, un actionneur linéaire de déverrouillage solidaire du support rigide et relié à un piston de déplacement de sorte que, dans une première position rétractée du piston, le corps creux du vérin est fermement maintenu sur le support rigide par l'intermédiaire de l'élément d'attache amovible et, dans une seconde position sortie du piston, le corps creux du vérin peut être désolidarisé du support rigide.

Selon des modes de réalisation préférés, le vérin conforme à la présente invention comprend l'une au moins des caractéristiques suivantes :
- l'élément d'attache amovible renferme des galets montés autour du piston afin de permettre la libération/le blocage dudit élément d'attache amovible sur le support ;
- l'élément d'attache amovible comporte également un premier organe interne de guidage linéaire du piston solidaire du support rigide et muni de logement pour porter les galets, et un second organe externe de guidage linéaire du piston, lesdits galets coulissant longitudinalement sur la surface extérieure dudit piston ;
- les organes de guidage sont cylindriques et concentriques, le piston comporte une partie évasée de type tronconique pour recevoir les galets dans la position désolidarisée du vérin et l'organe de guidage externe comportant une gorge annulaire hémisphérique à une extrémité avant pour recevoir les galets dans la position attachée du vérin sur le support rigide ;
- le piston comporte un ressort de verrouillage relié à un doigt de verrouillage ;
- l'élément d'attache amovible comporte, en partie avant, une zone de reprise des efforts du vérin et, en partie arrière, une zone de transmission des efforts au support ; et
- le vérin comporte également un piston de déverrouillage relié au corps creux et communicant avec la chambre arrière d'explosion.

La présente invention se rapporte également à un ensemble comportant un pantographe de largage d'un dispositif d'accrochage de charge pour aéronef et un vérin tel que décrit précédemment.

La présente invention concerne en outre un dispositif d'accrochage de charge pour aéronef comportant un pantographe de largage et un vérin tel que décrit précédemment.

L'invention va maintenant être décrite plus en détail en référence à des modes de réalisation particuliers donnés à titre d'illustration uniquement et représentés sur les figures annexées dans lesquelles :
- La figure 1 est une vue en coupe schématique d'un dispositif d'accrochage de charge pourvu d'un vérin conforme à la présente invention, le dispositif étant dans une position avant tir/largage de charge,
- La figure 2 est similaire à la figure 1 mais avec le vérin dans une position de tir pour le largage de la charge,
- La figure 3 est une vue similaire à la figure 1 mais avec le vérin en position d'après tir/largage de charge,
- La figure 4 est une vue de détail en coupe du vérin des figures 1 à 3 en position attachée, et
- La figure 5 est une vue similaire à la figure 4 dans laquelle le vérin est détaché.

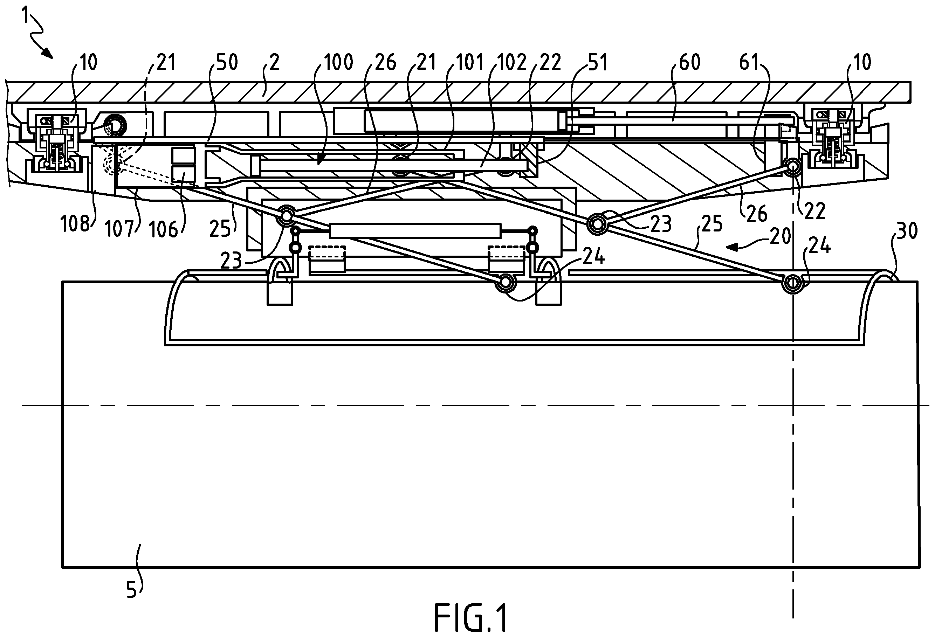

La figures 1 à 3 représentent un dispositif 1 de largage d'une charge 5 accrochée sous un aéronef 2, tel qu'un avion de chasse ou un hélicoptère de combat.

Ce dispositif 1 comporte principalement des moyens 10 d'attache de la charge 5 sous l'aéronef 2, par exemple sous la forme de rotules (appelées également tulipes) de type connu, un système extensible 20 de support de charge en forme de pantographe, également de type connu, un berceau 30 de support de la charge 5 et un vérin de déclenchement 100 faisant l'objet principal de la présente invention.

Le pantographe 20 comporte une paire de pivots supérieurs fixes 22, une paire de pivots supérieurs mobiles 21, une paire de pivots intermédiaires mobiles 23, une paire de pivots inférieurs mobiles 24 reliés au berceau 30, une première paire de bielles articulées 25 reliant chacun un pivot supérieur mobile 21, un pivot intermédiaire 23 et un pivot inférieur 24, et une seconde paire de bielles articulées 26 reliant un pivot supérieur fixe 22 et un pivot intermédiaire 24.

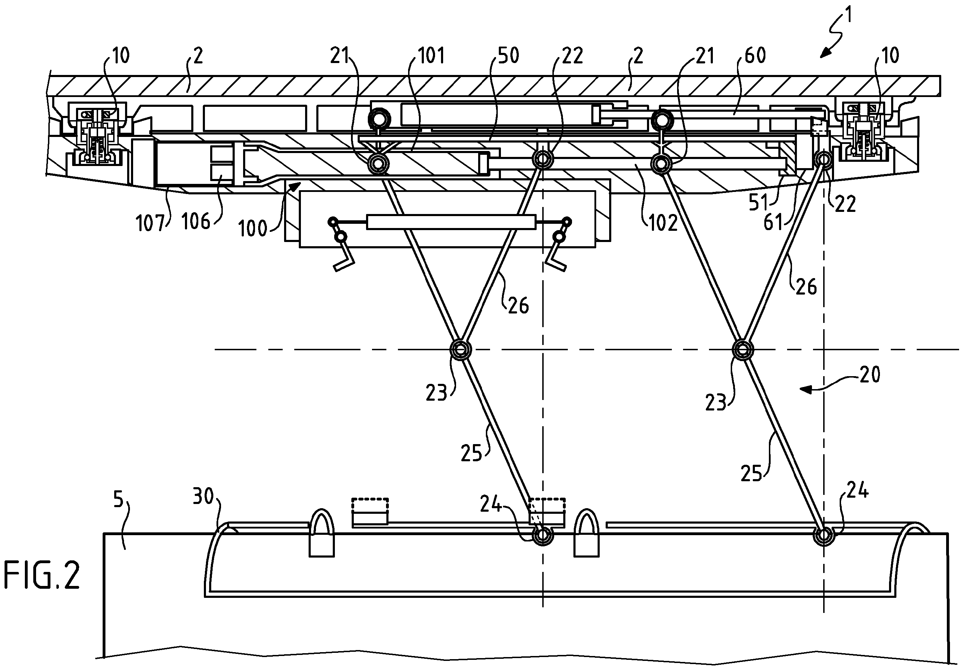

Comme cela est visible sur les figures 1 et 2 puis 3, le vérin 100 est relié au système extensible de largage 20 par l'intermédiaire de la paire de pivots mobiles supérieurs 21 qui permettent, quand la tige 102 dudit vérin 100 est dans une position sortie, de déplier le pantographe 20.

Plus précisément, les pivots mobiles 21 sont portés par un coulisseau 50 disposé le long du vérin 100 et comportant une première butée 51 contre laquelle la tige de vérin 102 prend appui. La sortie de la tige 102 de vérin (passage de la figure 1 à la figure 2), entraîne dans son mouvement le déplacement linéaire du coulisseau 50 et donc celui des pivots mobiles 22. Ces pivots 21 font alors pivoter les différentes bielles articulées 25 et 26 du pantographe autour des pivots respectifs 22, 23 et 24 de manière à éloigner de l'avion 2 le berceau 30 de support de la charge 5. Le dispositif de largage 1 est alors dans la position illustré par la figure 2.

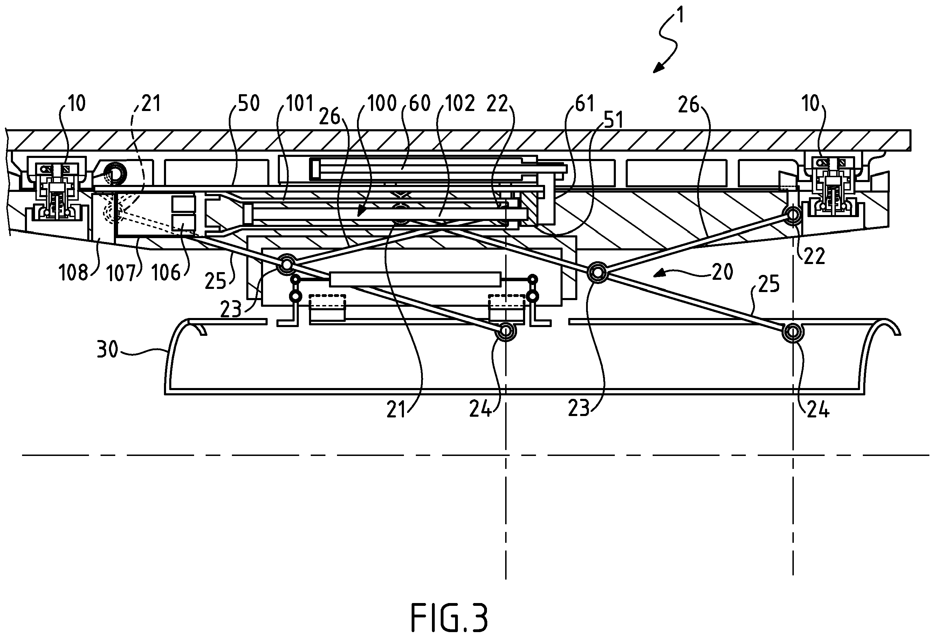

Une fois le largage de la charge 5 réalisé, le vérin 100 retourne dans sa position rétractée à l'aide d'un second vérin indépendant 60 qui repousse la tige 102 à l'aide d'une seconde butée 61 prenant appui congre la première butée 51 du coulisseau 50, ce qui permet, par le jeu des bielles et des pivots, de remonter le pantographe 20 vers l'avion en vue de l'installation d'une autre charge. Le dispositif de largage 1 est alors dans la position illustré par la figure 3.

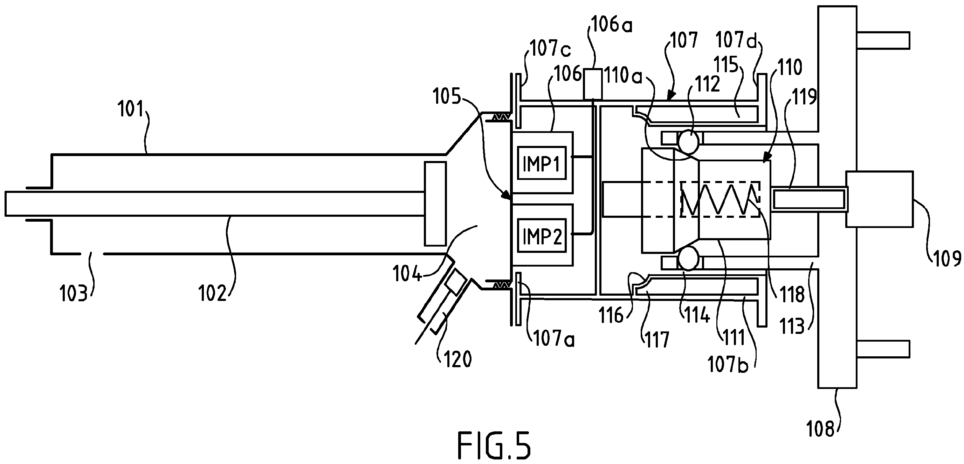

Le vérin d'actionnement 100 est représenté plus en détail sur les figures 1 et 5.

Ce vérin simple effet 100 comporte ainsi une tige de vérin 102 montée coulissante longitudinalement dans un corps creux 101 muni d'un orifice 103 de mise à l'air libre.

Le corps de vérin 101 comporte également une chambre arrière d'explosion 104 pourvue d'une cloison de délimitation 105 portant des impulseurs pyrotechniques 106, au nombre de deux dans le cas présents, reliés à un connecteur électrique 106a.

La chambre arrière d'explosion 104 est fixée, par exemple par vissage, sur une partie avant 107a d'un élément arrière d'attache amovible 107 du vérin 100. Cet élément arrière d'attache amovible 107 est reliée de manière détachable, au niveau d'une extrémité arrière 107b, à un support rigide de reprise des efforts 108 de sorte que le vérin 100 est démontable et interchangeable.

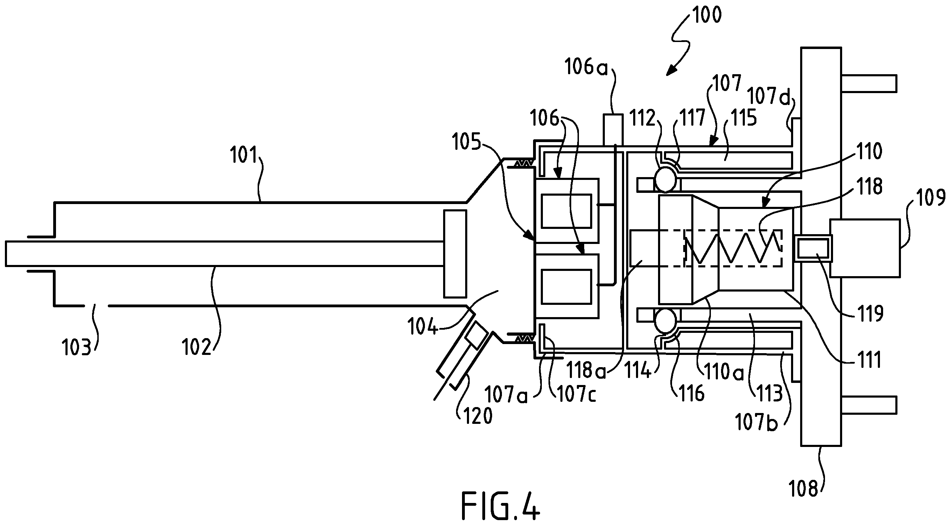

Plus précisément, afin de rendre le vérin 100 amovible, par exemple pour sa maintenance ou son remplacement total, l'élément d'attache amovible 107 renferme, en partie arrière, un actionneur linéaire de déverrouillage 109 solidaire du support rigide 108 et relié à un piston de déplacement 110 muni d'une partie mobile 119. Ainsi, dans une première position rétractée de blocage du piston de déplacement 110 (figure 4), et donc de sa tige 119, le corps creux 101 est fermement maintenu au support rigide 108 par l'intermédiaire de l'élément d'attache amovible 107 et, dans une seconde position sortie de la tige 119 du piston 110 (figure 5), le corps creux 101 peut être désolidarisé du support rigide 108, par exemple pour être changé.

Afin de maintenir l'élément d'attache amovible 107 contre le support rigide 108 (figure 4), ledit élément d'attache renferme des galets 112 montés autour du piston 110. L'élément d'attache amovible 107 comporte également un premier organe interne 113 de guidage linéaire du piston 110 solidaire du support rigide 108 et muni de logement 114 pour porter les galets 112, ainsi qu'un second organe externe 115 de guidage linéaire du piston 110, lesdits galets 112 coulissant longitudinalement sur la surface extérieure 111 dudit piston.

Plus précisément, les deux organes de guidage 113 et 115 sont cylindriques et concentriques, et le corps du piston 110 comporte une parie évasée de type tronconique 110a pour recevoir les galets 112 dans la position désolidarisée du vérin 100 (figure 5). De même, l'organe de guidage externe 115 comportant une gorge annulaire hémisphérique 116 à une extrémité avant 117 pour recevoir les galets 112 dans la position attachée du vérin 100 sur le support rigide 108 (figure 4). Les galets 112, maintenus par les logements 114 du premier moyen de guidage linéaire 113, circulent donc entre la surface extérieure 111 du piston 110 et le second moyen de guidage linéaire 115, et roulent sur la partie évasée 110a.

Avantageusement, l'actionneur linéaire de déverrouillage 109 comporte également un ressort de verrouillage 118 pour maintenir les galets 112 dans leur position de blocage (figure 4). Plus précisément, ce ressort 118 est disposé à l'intérieur du piston 110, il pousse sur un doigt de verrouillage 118a. Ainsi, c'est le ressort 118 qui maintient le piston 110 en position de verrouillage grâce à ce doigt.

L'élément d'attache amovible 107 comporte en outre, en partie avant 107a, une zone 107c de reprise des efforts du vérin 100 et, en partie arrière 107b, une zone 107d de transmission des efforts au support rigide 108.

Enfin, le vérin 100 comporte également un piston de déverrouillage 120 relié au corps creux 101 et communicant avec la chambre arrière d'explosion 104.

Il va de soi que la description détaillée de l'objet de l'Invention, donnée uniquement à titre d'illustration, ne constitue en aucune manière une limitation, les équivalents techniques étant également compris dans le champ des présentes revendications.

Ainsi, les impulseurs pyrotechniques peuvent être remplacés par un réservoir de gaz sous pression et une valve.

## Revendications

1. Vérin (100) pour l'actionnement d'un pantographe de largage (20) appartenant à un dispositif (1) d'accrochage de charge (5) pour aéronef (2) afin de larguer ladite charge (5), ledit vérin (100) comportant :
- un corps creux (101) muni d'un orifice (103) de mise à l'air libre,
- une tige de vérin (102) coulissant longitudinalement à l'intérieur du corps creux (101) pour pousser le pantographe (20),
- une chambre arrière d'explosion (104) communiquant avec la tige de vérin (102),
- au moins un dispositif (106) propulsant un volume de gaz sous pression dans la chambre arrière d'explosion (104) pour provoquer le déplacement à vitesse élevée de ladite tige de vérin (102) dans le corps creux (101), ledit dispositif étant par exemple un impulseur pyrotechnique ou un réservoir muni d'une valve, et un élément d'attache amovible (107) dont une extrémité avant (107a) est fixée à la chambre arrière d'explosion (104) et dont une extrémité arrière (107b) est reliée de manière détachable à un support rigide (108) de reprise des efforts de sorte que le vérin (100) est démontable et interchangeable, ***caractérisé en ce que*** l'élément d'attache amovible (107) comprend, en partie arrière, un actionneur linéaire de déverrouillage (109) solidaire du support rigide (108) et relié à un piston de déplacement (110) de sorte que, dans une première position rétractée du piston (110), le corps creux (101) du vérin (100) est fermement maintenu sur le support rigide (108) par l'intermédiaire de l'élément d'attache amovible (107) et, dans une seconde position sortie du piston (110), le corps creux (101) du vérin (100) peut être désolidarisé du support rigide (108).

2. Vérin (100) selon la revendication 1, **caractérisé en ce que** l'élément d'attache amovible (107) renferme des galets (112) montés autour du piston (110) afin de permettre la libération/le blocage dudit élément d'attache amovible (107) sur le support.

3. Vérin (100) selon la revendication 2, **caractérisé en ce que** l'élément d'attache amovible (107) comporte également un premier organe interne (113) de guidage linéaire du piston (110) solidaire du support rigide (108) et muni de logement (114) pour porter lesdits galets (112), et un second organe externe (115) de guidage linéaire du piston (110), lesdits galets (112) coulissant longitudinalement sur une surface extérieure (111) dudit piston (110) .

4. Vérin (100) selon la revendication 3, **caractérisé en ce que** les organes de guidage (113, 115) sont cylindriques et concentriques, le piston (110) comporte une partie évasée (110a) de type tronconique pour recevoir les galets (112) dans la position désolidarisée du vérin (110) et l'organe de guidage externe (115) comportant une gorge annulaire hémisphérique (116) à une extrémité avant (117) pour recevoir les galets (112) dans la position attachée du vérin (100) sur le support rigide (108).

5. Vérin (100) selon la revendication 4, **caractérisé en ce que** le piston (110) comporte un ressort de verrouillage (118) relié à un doigt de verrouillage (118a).

6. Vérin (100) selon l'une quelconque des revendications précédentes, **caractérisé en ce que** l'élément d'attache amovible (107) comporte, en partie avant (107a), une zone (107c) de reprise des efforts du vérin et, en partie arrière (107b), une zone (107d) de transmission des efforts au support rigide (108).

7. Vérin (100) selon l'une quelconque des revendications précédentes **caractérisé en ce qu'**il comporte également un piston de déverrouillage (120) relié au corps creux (101) et communicant avec la chambre arrière d'explosion (104).

8. Ensemble comportant un pantographe (20) de largage d'un dispositif (1) d'accrochage de charge pour aéronef et un vérin (100) selon l'une quelconque des revendications précédentes.

9. Dispositif (1) d'accrochage de charge pour aéronef comportant un pantographe (20) de largage et un vérin (100) selon l'une quelconque des revendications 1 à 7.

## Patentansprüche

1. Zylinder (100) zum Betätigen eines Auslöse-Stromabnehmers (20), der zu einer Vorrichtung (1) zur Aufnahme einer Last(5) für Luftfahrzeuge (2) -gehört, zum Auslösen der Last (5), wobei der Zylinder (100) Folgendes umfasst:
- einen Hohlkörper (101), der mit einer Öffnung (103) zum Entlüften versehen ist,
- eine längsverschiebbare Zylinderstange (102) innerhalb des Hohlkörpers (101) zum Schieben des Stromabnehmers (20),
- eine hintere Explosionskammer (104), die mit der Zylinderstange (102) in Verbindung steht,
- mindestens eine Vorrichtung (106), die ein Gasvolumen unter Druck in die hintere Explosionskammer (104) zur Verschiebung der Zylinderstange (102) mit hoher Geschwindigkeit in den Hohlkörper (101) treibt, wobei die Vorrichtung beispielsweise ein pyrotechnisches Laufrad oder ein mit einem Ventil versehener Behälter ist, und einem entfernbaren Befestigungselement (107) mit einem an der hinteren Explosionskammer (104) befestigten vorderen Ende (107a), und einem mit einem starren Träger (108) zur Kraftaufnahme lösbar verbundenen hinteren Ende (107b), so dass der Zylinder (100) abnehmbar und austauschbar ist, **dadurch gekennzeichnet, dass** das entfernbare Befestigungselement (107) aus einem hinteren Teil besteht, einem entriegelbaren Linearantrieb (109), der mit dem starren Träger (108) fest verbunden ist und mit einem Verschiebekolben (110) verbunden ist, so dass in einer ersten eingefahrenen Stellung des Kolbens (110) der Hohlkörper (101) des Zylinders (100) über das entfernbare Befestigungselement (107) fest auf dem starren Träger (108) gehalten wird und in einer zweiten ausgefahrenen Stellung des Kolbens (110) der Hohlkörper (101) des Zylinders (100) von dem starren Träger (108) abgekuppelt werden kann.

2. Zylinder (100) nach Anspruch 1, **dadurch gekennzeichnet, dass** das entfernbare Befestigungselement (107) Rollen (112) umfasst, die um den Kolben (110) herum angebracht sind, um das Lösen/Verriegeln des entfernbaren Befestigungselements (107) auf dem Träger zu ermöglichen.

3. Zylinder (100) nach Anspruch 2, **dadurch gekennzeichnet, dass** das abnehmbare Befestigungselement (107) auch ein erstes inneres Führungselement (113) zur linearen Führung des Kolbens (110) umfasst, das mit dem starren Träger (108) fest verbunden ist und mit einem Gehäuse (114) zum Tragen der Rollen (112) versehen ist, und ein zweites äußeres Führungselement (113) zur linearen Führung des Kolbens (110) umfasst, wobei die Rollen (112) in Längsrichtung auf einer Außenfläche (111) des Kolbens (110) gleiten.

4. Zylinder (100) nach Anspruch 3, **dadurch gekennzeichnet, dass** die Führungselemente (113, 115) zylindrisch und konzentrisch sind, der Kolben (110) einen Bördelabschnitt (110a) von konischer Ausführung zum Aufnehmen der Rollen (112) in der Position losgelöst von dem Zylinder (110) aufweist und das äußere Führungselement (115) an einem vorderen Ende (117) eine halbkugelförmige Ringnut (116) zum Aufnehmen der Rollen (112) in der verbundenen Position des Zylinders (100) auf dem starren Träger (108) aufweist.

5. Zylinder (100) nach Anspruch 4, **dadurch gekennzeichnet, dass** der Kolben (110) eine Verriegelungsfeder (118) aufweist, die an einen Schließfinger (118a) angebracht ist.

6. Zylinder (100) nach einem der vorstehenden Ansprüche, **dadurch gekennzeichnet, dass** das entfernbare Befestigungselement (107) im vorderen Bereich (107a) einen Bereich (107c) zur Kraftaufnahme des Zylinders und im hinteren Bereich (107b) einen Bereich (107d) zur Übertragung der Kräfte auf den starren Träger (108) aufweist.

7. Zylinder (100) nach einem der vorstehenden Ansprüche, **dadurch gekennzeichnet, dass** er außerdem einen Entriegelungskolben (120), der mit dem Hohlkörper (101) verbunden ist und mit der hinteren Explosionskammer (104) in Verbindung steht, aufweist.

8. Baugruppe mit einem Auslöse-Stromabnehmer (20) zum Auslösen einer Lastaufnahmevorrichtung (1) für Flugzeuge und einem Zylinder (100) nach einem der vorhergehenden Ansprüche.

9. Lastaufnahmevorrichtung (1) für Flugzeuge, die einen Auslöse-Stromabnehmer (20) und einen Zylinder (100) nach einem der Ansprüche 1 bis 7 aufweist.

## Claims

1. Cylinder (100) for actuating a release pantograph (20) belonging to a device (1) for suspending a load (5) for an aircraft (2) in order to release said load (5), said cylinder (100) comprising:
- a hollow body (101) provided with a vent opening (103),
- a cylinder rod (102) that slides longitudinally inside the hollow body (101) in order to push the pantograph (20),
- a rear explosion chamber (104) that communicates with the cylinder rod (102),
- at least one device (106) that propels a pressurised gas volume into the rear explosion chamber (104) to cause said cylinder rod (102) to move at high speed into the hollow body (101), said device for example being a pyrotechnic initiator or a reservoir provided with a valve, and a removable attachment element (107), of which a front end (107a) is fastened to the rear explosion chamber (104) and a rear end (107b) is detachably connected to a rigid, force-absorbing support (108) such that the cylinder (100) can be removed and replaced, **characterised in that** the removable attachment element (107) comprises, in the rear part, a linear unlocking actuator (109) that is rigidly connected to the rigid support (108) and is connected to a displacement piston (110) such that, in a first, retracted position of the piston (110), the hollow body (101) of the cylinder (100) is firmly retained on the rigid support (108) by means of the removable attachment element (107) and, in a second, extended position of the piston (110), the hollow body (101) of the cylinder (100) can be disconnected from the rigid support (108).

2. Cylinder (100) according to claim 1, **characterised in that** the removable attachment element (107) contains rollers (112) mounted around the piston (110) in order to allow said removable attachment element (107) to be released/blocked on the support.

3. Cylinder (100) according to claim 2, **characterised in that** the removable attachment element (107) also comprises a first internal member (113) for linearly guiding the piston (110) that is rigidly connected to the rigid support (108) and is provided with a recess (114) for supporting said rollers (112), and a second external member (115) for linearly guiding the piston (110), said rollers (112) sliding longitudinally on an outer surface (111) of said piston (110).

4. Cylinder (100) according to claim 3, **characterised in that** the guide members (113, 115) are cylindrical and concentric, the piston (110) comprises a truncated-cone-shaped flared part (110a) for receiving the rollers (112) in the position disconnected from the cylinder (110) and the external guide member (115) comprises a hemispherical annular groove (116) at a front end (117) for receiving the rollers (112) in the position in which the cylinder (100) is attached to the rigid support (108).

5. Cylinder (100) according to claim 4, **characterised in that** the piston (110) comprises a locking spring (118) connected to a locking finger (118a).

6. Cylinder (100) according to any one of the preceding claims, **characterised in that** the removable attachment element (107) comprises, in the front part (107a), a region (107c) for absorbing the forces of the cylinder and, in the rear part (107b), a region (107d) for transmitting the forces to the rigid support (108).

7. Cylinder (100) according to any one of the preceding claims, **characterised in that** it also comprises an unlocking piston (120) that is connected to the hollow body (101) and communicates with the rear explosion chamber (104).

8. Assembly comprising a release pantograph (20) of a device (1) for suspending a load for an aircraft, and a cylinder (100) according to any one of the preceding claims.

9. Device (1) for suspending a load for an aircraft, comprising a release pantograph (20) and a cylinder (100) according to any one of claims 1 to 7.
